# EUROPÄISCHE PATENTSCHRIFT

(11) **EP 3 224 062 B1**
(45) Veröffentlichungstag und Bekanntmachung des Hinweises auf die Patenterteilung: **10.10.2018**
(21) Anmeldenummer: 15752991.8
(22) Anmeldetag: 10.08.2015
(51) Int. Cl.: B60C 11/04, B60C 11/03, B60C 11/12

(54) **FAHRZEUGLUFTREIFEN**
PNEUMATIC VEHICLE TYRE
PNEUMATIQUE DE VÉHICULE

(30) Priorität: 24.11.2014 DE 102014223894
(43) Veröffentlichungstag der Anmeldung: 04.10.2017
(73) Patentinhaber: Continental Reifen Deutschland GmbH, 30165 Hannover (DE)
(72) Erfinder: RITTWEGER, Stefan, 30826 Garbsen (DE); BAPTISTA, Diogo, 30159 Hannover (DE); MAGALHAES RISCHBIETER, Ana Maria, 30826 Garbsen (DE); LORCHHEIM, Andrea, 30823 Garbsen (DE)
(74) Vertreter: Finger, Karsten
(86) Internationale Anmeldenummer: PCT/EP2015/068332
(87) Internationale Veröffentlichungsnummer: WO 2016/082948

(56) Entgegenhaltungen:
- EP-A2- 0 989 000
- WO-A1-2014/174813
- JP-A- 2007 269 144
- JP-A- 2009 067 181

## Beschreibung

Die Erfindung betrifft einen Fahrzeugluftreifen mit einem profilierten Laufstreifen mit durch Umfangsrillen von einander beabstandeten, über den Umfang des Reifens erstreckten Profilrippen, welche in radialer Richtung R nach außen von einer die Bodenkontaktoberfläche bildenden radial äußeren Oberfläche begrenzt sind und mit einer in der radial äußeren Oberfläche in axialer Richtung A des Reifens gemessen Breite B ausgebildet sind.

Bei derartigen Fahrzeugluftreifen ist es wünschenswert zur Erzielung guter Trockeneigenschaften und eines guten Geräuschverhaltens radial äußere Oberflächen möglichst glatt auszubilden. Bekannte Profilrillen oder Freieinschnitte beeinträchtigen die Steifigkeit und somit Trockeneigenschaften wie Traktion, Bremsen auf trockener Straße oder Handling. Darüber hinaus erleichtern sie die Entstehung unerwünschter Geräusche. Andererseits sind derartige Rillen und feinschnittfreie Profilrippen schlechter geeignet, auf nassen Straßen Wasser aufzunehmen und zu verdrängen, wodurch Nassgriffeigenschaften negativ beeinträchtigt und Aquaplaning begünstigt werden kann.

Es ist bekannt, derartige Profilrippen zur Erhöhung des Nassgriffs mit Feineinschnitten auszubilden, durch welche Nassgriff verbessert werden kann. Allerdings fehlt den Feineinschnitten eine Aufnahmekapazität zum schnellen Aufnehmen von Wasser an der Reifenoberfläche.

Gerade bei Neureifen, in welchen das Profil mit großer Profiltiefe ausgebildet ist, können die bekannten, tief ins Profil reichenden Feineinschnitte die für gute Trockeneigenschaften gewünschte Steifigkeit unerwünscht stark herabsetzen.

Aus der JP 2007269144 A ist die Ausbildung eines Fahrzeugluftreifens nach dem Oberbegriff von Anspruch 1 mit erhabenen Profilelementen bekannt, in denen über den Umfang des Reifens hinweg verteilt Helmholtz-Resonatoren mit Vertiefungen und mit Kanälen in der radial äußeren Oberfläche ausgebildet sind, die in die Vertiefungen münden. Dabei sind zur Umsetzung der durch die Helmholtz-Resonatoren gewünschten Geräuschminimierungen große Volumina der Vertiefungen erforderlich. Hierdurch wird die für gute Trockeneigenschaften gewünschte Steifigkeit ungewünscht stark herab gesetzt.
Der Erfindung liegt die Aufgabe zugrunde, bei derartigen Fahrzeugluftreifen trotz guten Trockeneigenschaften und gutem Geräuschverhalten einen schnelleren Griffkontakt auch auf nassen Oberflächen zu ermöglichen.
Die Aufgabe wird erfindungsgemäß durch die Ausbildung eines Fahrzeugluftreifens mit einem profilierten Laufstreifen mit durch Umfangsrillen von einander beabstandeten, über den Umfang des Reifens erstreckten Profilrippen, welche in radialer Richtung R nach außen von einer die Bodenkontaktoberfläche bildenden radial äußeren Oberfläche begrenzt sind und mit einer in der radial äußeren Oberfläche in axialer Richtung A des Reifens gemessen Breite B ausgebildet sind, gemäß den Merkmalen von Anspruch 1 gelöst, bei dem in der radial äußeren Oberfläche wenigstens einer Profilrippe über den Umfang des Reifens verteilt Oberflächenkanäle mit einer längs ihrer Haupterstreckung in der radial äußeren Oberfläche gemessenen Breite b₁ mit b₁≤3mm und mit einer in radialer Richtung R gemessenen Tiefe t₁ mit 1mm ≤ t₁ ≤ 2mm ausgebildet sind, bei dem in der radial äußeren Oberfläche über den Umfang des Reifens verteilt innerhalb des in axialer Richtung A gemessenen mittleren Erstreckungsabschnitts - insbesondere Erstreckungsdrittels - der Umfangsrippe kalottenförmige Vertiefungen mit einem in der radial äußeren Oberfläche ausgebildeten Durchmesser D mit b₁<D≤5mm und mit einer Tiefe t₂ mit t₁< t₂ ≤ 3mm ausgebildet sind, und bei dem in jede Vertiefung ein Kanal mündet.

Durch diese Ausbildung wird es ermöglicht, dass Wasser im Oberflächenbereich gerade bei Neureifen mithilfe der Oberflächenkanäle aufgenommen und abgeleitet werden kann. Die kalottenförmigen Vertiefungen ermöglichen dabei ein für Neureifen großes Aufnahme-Reservoir für Oberflächenwasser, so dass dieses schnell aufgenommen, gesammelt und abgeleitet werden kann. Durch die Kalottenform ist dabei das Reservoir gegen Beschädigungen bspw. durch Steine besonders resistent. Die Oberflächenkanäle ermöglichen dabei durch ihre feinen Kanten gerade bei Neureifen auch zusätzlichen Griff auf nasser Oberfläche. Die Ausbildung der Rippen mithilfe der Oberflächenkanäle und der Vertiefungen ermöglicht die Beibehaltung einer sehr steifen, für gute Trockeneigenschaften und gute Geräuscheigenschaften optimierten Profilrippe.

Besonders vorteilhaft ist die Ausbildung eines Fahrzeugreifens gemäß den Merkmalen von Anspruch 2, wobei diese Kanäle der Profilrippe längs ihrer Haupterstreckung mit einer axialen Richtungskomponente - und insbesondere im Wesentlichen parallel zu einander - ausgerichtet sind. Hierdurch kann in einfacher Weise eine optimale Entwässerung zu Umfangsrillen hin umgesetzt werden.

Besonders vorteilhaft ist die Ausbildung eines Fahrzeugreifens gemäß den Merkmalen von Anspruch 3, wobei die Vertiefung in axialer Richtung A des Reifens gesehen jeweils auf derjenigen axialen Seite des Kanals angeordnet, die zu der für den Einsatz am Fahrzeug als Außenschulter OU ausgebildeten Reifenschulter hin weist, und der Kanal in axialer Richtung A des Reifens gesehen auf derjenigen axialen Seite des Vertiefung angeordnet ist, die zu der für den Einsatz am Fahrzeug als Innenschulter IN ausgebildeten Reifenschulter hin weist. Hierdurch können Handling-Eigenschaften weiter verbessert werden.

Besonders vorteilhaft ist die Ausbildung eines Fahrzeugreifens gemäß den Merkmalen von Anspruch 4, wobei in dem einen Oberflächenkanal nach radial innen hin begrenzenden Kanalgrund zusätzlich ein parallel zur Erstreckung des Oberflächenkanals erstreckter Feineinschnitt ausgebildet ist. Hierdurch kann in einfacher Weise die Oberflächenentwässerung weiter verbessert werden. Dabei kann zusätzlich durch Öffnen des Einschnitts beim Abrollen die Kanalflanke und der Feineinschnitt - als Wischlippe - Oberflächenwasser beiseite wischen.

Besonders vorteilhaft ist die Ausbildung eines Fahrzeugreifens gemäß den Merkmalen von Anspruch 5, wobei der Feineinschnitt auf der Mittellinie des Kanalgrundes erstreckt ausgebildet ist. Hierdurch kann in einfacher Weise die Oberflächenentwässerung weiter verbessert werden. Dabei kann zusätzlich durch Öffnen des Einschnitts beim Abrollen die Kanalflanke und der Feineinschnitt - wie eine Wischlippe - Oberflächenwasser beiseite wischen.

Besonders vorteilhaft ist die Ausbildung eines Fahrzeugreifens gemäß den Merkmalen von Anspruch 6, wobei der Feineinschnitt mit einer von der radial äußeren Oberfläche in radialer Richtung R nach innen hin gemessenen Tiefe t₃ mit t₁< t₃≤ P_{T} ausgebildet ist, wobei die maximale P_{T} Profiltiefe des Reifens ist.

Besonders vorteilhaft ist die Ausbildung eines Fahrzeugreifens gemäß den Merkmalen von Anspruch 7, wobei zwei in Umfangsrichtung U benachbart hintereinander angeordnete Oberflächenkanäle jeweils in einem in Umfangsrichtung U gemessenen Abstand a mit 25mm ≤a≤ 40mm zueinander angeordnet sind.

Besonders vorteilhaft ist die Ausbildung eines Fahrzeugreifens gemäß den Merkmalen von Anspruch 8, wobei zusätzlich -insbesondere jeweils - zwei in Umfangsrichtung U des Reifens benachbart hintereinander angeordnete Vertiefungen durch einen weiteren in der radial äußeren Oberfläche ausgebildeten - und insbesondere im Wesentlichen in Umfangsrichtung erstreckten - Oberflächenkanal verbunden sind. Hierdurch kann die Oberflächenentwässerung zusätzlich weiter verbessert werden.

Die Erfindung wird im Folgenden an Hand der in den Figuren 1 bis 12 dargestellten Ausführungsbeispiele näher erläutert. Hierin zeigen
- Fig.1: einen Umfangsabschnitt eines Laufstreifenprofils für Pkw-Reifen in Draufsicht
- Fig.2: einen vergrößerten Ausschnitt des Laufstreifenprofils von Fig.1 in Draufsicht
- Fig.3: das Laufstreifenprofil von Fig.2 in Schnittdarstellung gemäß Schnitt III-III von Fig.2,
- Fig.4: das Laufstreifenprofil von Fig.2 in Schnittdarstellung gemäß Schnitt IV-IV von Fig.2 zur Erläuterung des Kanalquerschnitts,
- Fig.5: das Laufstreifenprofil von Fig.2 in Schnittdarstellung gemäß Schnitt V-V von Fig.2,
- Fig.6: das Laufstreifenprofil von Fig.2 in Schnittdarstellung gemäß Schnitt IV-IV von Fig.2 mit alternativem Schnittkonturverlauf des Oberflächenkanals,
- Fig.7: das Laufstreifenprofil von Fig.2 in Schnittdarstellung gemäß Schnitt IV-IV von Fig.2 mit alternativer Darstellung der Schnittkontur des Oberflächenkanals,
- Fig.8: einen Umfangsabschnitt eines Laufstreifenprofils gemäß Fig.1 in alternativer Ausführung,
- Fig. 9: das Laufstreifenprofil von Fig.8 in Schnittdarstellung gemäß Schnitt IX-IX von Fig.8,
- Fig.10: einen Umfangsabschnitt eines Laufstreifenprofils von Fig. 1 in alternativer Ausführung,
- Fig.11: das Laufstreifenprofil von Fig.10 in vergrößerter Darstellung und
- Fig.12: das Laufstreifenprofil von Fig.10 und 11 in Schnittdarstellung gemäß Schnitt XII-XII von Fig. 11

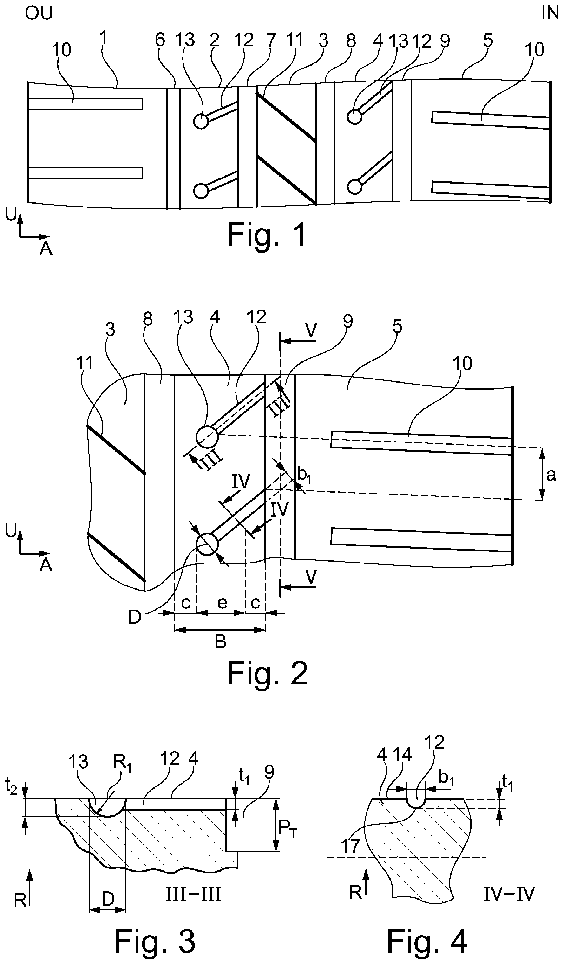

Die Figuren 1 und 2 zeigen ein Laufstreifenprofil eines Fahrzeugluftreifens für Personenkraftwagen (Pkw), bei welchem in axialer Richtung A des Fahrzeugluftreifens nebeneinander angeordnet jeweils über den gesamten Umfang des Fahrzeugluftreifens erstreckt und in Umfangsrichtung U ausgerichtet, radial erhabene Profilrippen 1, 2, 3, 4 und 5 nebeneinander angeordnet sind.

Die Profilrippe 1 bildet dabei die an der linken Schulter des Reifenprofils ausgebildete Umfangsrippe. Die Profilrippe 5 bildet die in Fig.1 an der rechten Schulter des Reifenprofils ausgebildete Umfangsrippe. Die Profilrippen 2, 3 und 4 sind in axialer Richtung A des Fahrzeugluftreifens zwischen den beiden Schulterprofilrippen 1 und 5 angeordnet. Die Profilrippe 1 ist dabei die im montierten Zustand am Fahrzeug zur Außenseite des Fahrzeugs OU hinweisende Profilrippe. Die Profilrippe 5 ist die zur Innenseite IN hinweisende Profilrippe.

Die Profilrippen 1 und 2 sind in axialer Richtung A des Fahrzeugluftreifens durch eine über den gesamten Umfang des Fahrzeugluftreifens erstreckte und in Umfangsrichtung U ausgerichtete Umfangsrille 6 bekannter Art voneinander getrennt. Die Profilrippen 2 und 3 sind in axialer Richtung A des Fahrzeugluftreifens durch eine über den gesamten Umfang des Fahrzeugluftreifens erstreckte und in Umfangsrichtung U ausgerichtete Umfangsrille 7 bekannter Art getrennt voneinander getrennt. Die Profilrippe 3 und die Profilrippe 4 sind in axialer Richtung A des Fahrzeugluftreifens durch eine über den gesamten Umfang des Fahrzeugluftreifens erstreckte und in Umfangsrichtung U ausgerichtete Umfangsrille 8 bekannter Art voneinander getrennt. Die Umfangsrippe 4 und die Umfangsrippe 5 sind in axialer Richtung A des Fahrzeugluftreifens durch eine über den gesamten Umfang des Fahrzeugluftreifens erstreckte und in Umfangsrichtung U ausgerichtete Umfangsrille 9 bekannter Art voneinander getrennt.

Die Profilrippen 1, 2, 3, 4 und 5 sind in radialer Richtung R des Fahrzeugluftreifens nach außen hin durch eine die Mantelfläche des Laufstreifenprofils bildende radial äußere Oberfläche 14 begrenzt.

Die Umfangsrillen 6, 7, 8 und 9 sind in bekannter Weise mit einer in radialer Richtung R des Fahrzeugluftreifens gemessenen, maximalen Profiltiefe P_{T} ausgebildet, wobei die maximale Profiltiefe P_{T} mit 7 mm ≤ P_{T} ≤ 11 mm bspw. P_{T}= 9 mm ausgebildet ist.

In der Profilrippe 1 sind mit axialem Abstand zur Umfangsrille 6 über den Umfang des Fahrzeugluftreifens hintereinander verteilt angeordnete, axial erstreckte Querrillen 10 bekannter Art ausgebildet. Ebenso sind in der Profilrippe 5 in bekannter Weise mit axialem Abstand zur Umfangsrille 9 über den Umfang des Fahrzeugluftreifens hintereinander verteilt angeordnete, in axialer Richtung A erstreckte Querrillen 10 in bekannter Art ausgebildet. Die Querrillen 10 sind längs ihrer Erstreckung dabei mit einer in der radial äußeren Oberfläche 14 gemessenen Breite von 3 bis 6 mm ausgebildet. Die Querrillen 10 sind mit einer sich längs ihrer Erstreckung verändernden, in radialer Richtung R gemessenen Tiefe mit einer maximalen Tiefe von 6 bis 8 mm ausgebildet.

Die mittlere Profilrippe 3 ist über den Umfang des Fahrzeugluftreifens hinweg mit schräg zur axialen Richtung A verlaufend ausgerichteten Feineinschnitten 11 ausgebildet. Die Feineinschnitte 11 sind längs ihrer Erstreckung in der radial äußeren Oberfläche 14 mit einer Breite von 0,6 bis 1,0 mm ausgebildet und mit einer in radialer Richtung R gemessenen Tiefe, die mindestens 5 mm groß ist und maximal der maximalen Profiltiefe P_{T} entspricht.

In der beiden Profilrippen 2 und 4 sind jeweils - wie in Fig.1 zu erkennen ist - über den Umfang des Fahrzeugluftreifens hinweg verteilt angeordnet feine, geradlinig erstreckte Oberflächenkanäle 12 ausgebildet. Die Oberflächenkanäle 12 sind mit ihrer Haupterstreckungsrichtung unter Einschluss eines Neigungswinkels zur axialen Richtung A ausgerichtet, welcher wenigstens 0° und maximal 45° ist.

Die Oberflächenkanäle 12 der Profilrippe 2 erstrecken sich dabei von der zur Fahrzeuginnenseite IN weisenden Umfangsrille 7 ausgehend in Richtung zur Außenseite OU und münden jeweils in einer in axialem Abstand c von der zur Außenseite OU hin die Profilrippe 2 begrenzenden Umfangsrille 6 ausgebildeten Vertiefung 13. Die Oberflächenkanäle 12 der Profilrippe 4 erstrecken sich dabei von der zur Fahrzeuginnenseite IN weisenden Umfangsrille 9 ausgehend in Richtung zur Außenseite OU und münden jeweils in einer in axialem Abstand c von der zur Außenseite OU hin die Profilrippe 4 begrenzenden Umfangsrille 8 ausgebildeten Vertiefung 13.

Im Folgenden wird die Ausbildung der Oberflächenkanäle 12 und der Vertiefungen 13 lediglich anhand der Ausbildung der in Fig.2 dargestellten Profilrippe 4 näher erläutert. Die Ausbildung bei der Profilrippe 2 ist analog.

Die Oberflächenkanäle 12 sind mit einer - wie in Fig.4 dargestellt - von der radial äußeren Oberfläche 14 ausgehend in radialer Erstreckungsrichtung R des Fahrzeugluftreifens nach innen hin gemessenen Tiefe t₁ ausgebildet und in radialer Richtung R nach innen hin durch einen Kanalgrund 17 begrenzt. Die Oberflächenkanäle 12 sind dabei mit einer in der radial äußeren Oberfläche 14 gemessenen Breite b₁ ausgebildet. Die Oberflächenkanäle 12 sind dabei längs ihrer gesamten Erstreckung mit der Tiefe t₁ und der Breite b₁ ausgebildet. Die Vertiefungen 13 sind in einem Abstand c von der Umfangsrille 8 in der radial äußeren Oberfläche 14 ausgebildet. Die Vertiefungen 13 sind dabei kugelkalottenförmig ausgebildet, wobei sie in der radial äußeren Oberfläche 14 eine kreisförmige Schnittkontur mit einem Kreisdurchmesser D aufweisen und mit einer von der radial äußeren Oberfläche 14 ausgehend in radialer Richtung nach innen hin gemessenen Tiefe t₂ ausgebildet sind. Dies ist in Fig.3 dargestellt.

Für die Tiefen t₁, t₂, b₁ und D gilt: b₁ ≤ 3 mm, 1 mm ≤ t₁ ≤ 2 mm, t₁ < t₂ ≤ 3 mm und b₁ < D ≤ 5 mm. Wie in Fig.3 zu erkennen ist, ist der Kugelradius R₁ der Kugelkalotte dabei mit R₁ ≤ (D/2) ausgebildet.

Beispielsweise ist t₁ = 1,5 mm, b₁ = 3 mm, t₂ = 3 mm und D = 5 mm gewählt.

Die Vertiefungen 13 sind dabei innerhalb eines mittleren axialen Erstreckungsabschnittes der Länge e der Profilrippe 4 in der radial äußeren Oberfläche 14 positioniert ausgebildet, welcher sich in axialer Richtung A zwischen einer axialen Position im Abstand c von der die Umfangsrippe 4 zur Außenseite OU hin begrenzenden Umfangsrille 8 und einer axialen Position im Abstand c von der Umfangsrille 9 erstreckt. Dabei ist e mit c ≤ e ≤ 2c gewählt. Beispielsweise ist c = e gewählt.

In Umfangsrichtung U des Fahrzeugluftreifens benachbart hintereinander ausgebildete Oberflächenkanäle 12 sind dabei jeweils in einem in Umfangsrichtung U gemessenen Abstand a mit 25 mm ≤ a ≤ 40 mm zueinander angeordnet.

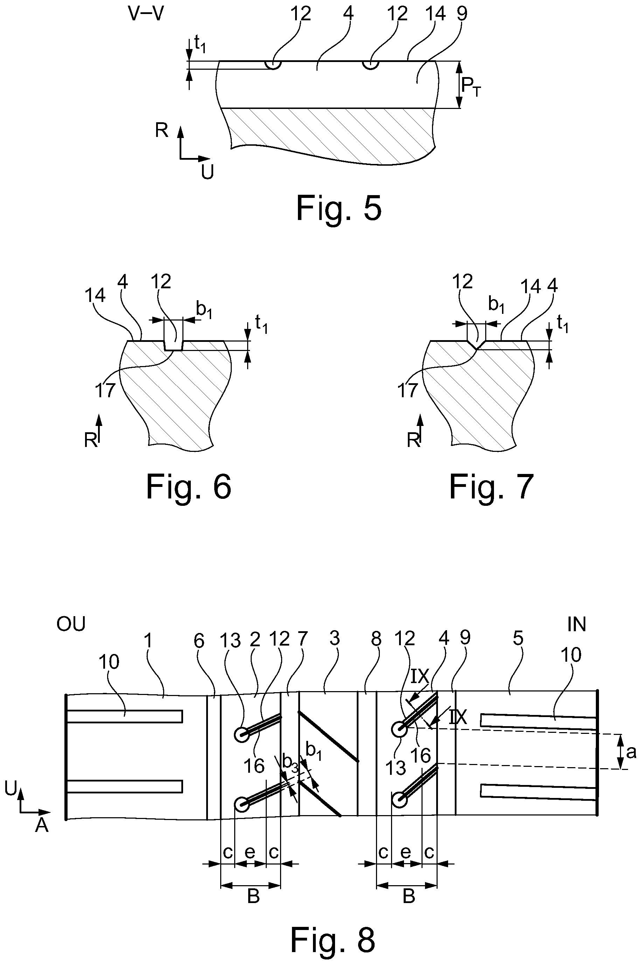

Die Oberflächenkanäle 12 sind dabei in einem Ausführungsbeispiel - wie z. B. in Fig. 4 dargestellt ist - mit einer U-förmigen oder halbkreisförmigen Schnittkontur ausgebildet. In alternativer Ausführung sind die Oberflächenkanäle 12 - wie in Fig. 6 dargestellt ist - mit einer rechteckigen Schnittkontur oder - wie in Fig. 7 dargestellt ist - mit einer V-förmigen Schnittkontur ausgebildet.

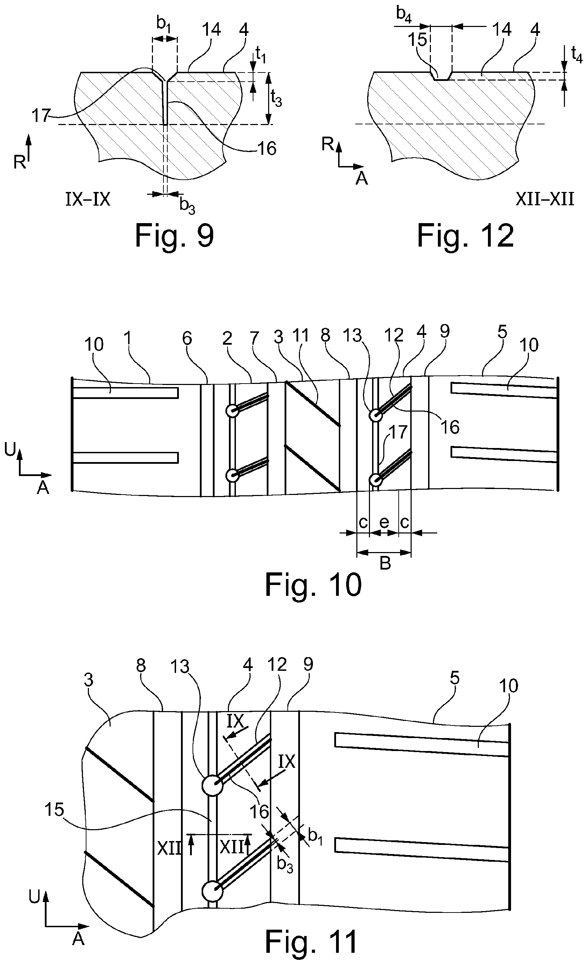

Fig. 8 und Fig. 9 zeigen ein alternatives Ausführungsbeispiel, bei welchem im Kanalgrund 17 längs der Erstreckung der geradlinig erstreckten Oberflächenkanäle 12 auf und entlang der Mittellinie des Kanalgrundes ein zusätzlicher Feineinschnitt 16 ausgebildet ist, welcher sich von der Umfangsrille 9 ausgehend längs der gesamten Erstreckung des Oberflächenkanals 12 bis zum tiefsten Punkt der Vertiefung 13 erstreckt. Der Feineinschnitt 16 ist dabei längs seiner gesamten Erstreckung mit einer von der radial äußeren Oberfläche 14 der Profilrippe 4 ausgehenden, in radialer Richtung R nach innen hin gemessenen Tiefe t₃ und mit einer Breite b₃ ausgebildet.

Die Tiefe t₃ ist dabei mit t₁ <t₃ ≤ P_{T} ausgebildet. Beispielsweise ist die Tiefe t₃ mit t₃ = P_{T} ausgebildet.

Die Breite b₃ ist mit 0,4 mm ≤ b₃ ≤ 1 mm gewählt ausgebildet.

In den Figuren 10, 11 und 12 ist darüber hinaus ein weiteres Ausführungsbeispiel des Fahrzeugluftreifens dargestellt, bei welchem in den Profilrippen 4 die Oberflächenkanäle 12 und die Vertiefungen 13 wie in der Ausführung von Fig.8 dargestellt und beschrieben ausgebildet sind. Darüber hinaus sind in diesem Ausführungsbeispiel die in Umfangsrichtung U benachbarten, hintereinander angeordneten Vertiefungen 13 jeweils durch einen zusätzlichen, in der radial äußeren Oberfläche 14 ausgebildeten Oberflächenkanal 17 miteinander verbunden. Der Oberflächenkanal 17 ist jeweils in Umfangsrichtung U ausgerichtet und in der radial äußeren Oberfläche 14 längs seiner gesamten Erstreckung mit einer Breite b₄ und mit einer von der radial äußeren Oberfläche 14 ausgehenden, in radialer Richtung R nach innen hin gemessenen Tiefe t₄ ausgebildet.

Dabei ist die Breite b₄ mit 2 mm ≤ b₄ ≤ 3 mm ausgebildet und die Tiefe t₄ mit 1 mm ≤ t₄ ≤ 2 mm.

Beispielsweise ist t₄ mit t₄ = t₁ und b₄ mit b₄ = b₁ gewählt.

Fig. 12 zeigt darüber hinaus am Beispiel eines Oberflächenkanals 17 eine weitere mögliche Ausführung der Querschnittkontur der Oberflächenkanäle 17 und 12 in Form einer Trapezförmigen Kontur.

### Bezugszeichenliste

### (Teil der Beschreibung)

- 1: Umfangsrippe
- 2: Umfangsrippe
- 3: Umfangsrippe
- 4: Umfangsrippe
- 5: Umfangsrippe
- 6: Umfangsrille
- 7: Umfangsrille
- 8: Umfangsrille
- 9: Umfangsrille
- 10: Querrille
- 11: Feineinschnitt
- 12: Oberflächenkanal
- 13: Vertiefung
- 14: Radial äußere Oberfläche
- 15: Oberlächenkanal
- 16: Feineinschnitt
- 17: Kanalgrund

## Patentansprüche

1. Fahrzeugluftreifen mit einem profilierten Laufstreifen mit durch Umfangsrillen (6,7,8,9) von einander beabstandeten, über den Umfang des Reifens erstreckten Profilrippen (1,2,3,4,5), welche in radialer Richtung R nach außen von einer die Bodenkontaktoberfläche bildenden radial äußeren Oberfläche (14) begrenzt sind und mit einer in der radial äußeren Oberfläche (14) in axialer Richtung A des Reifens gemessen Breite B ausgebildet sind,
**wobei in der radial äußeren Oberfläche (14) wenigstens einer Profilrippe (4) über den Umfang des Reifens verteilt Oberflächenkanäle (12) mit einer längs ihrer Haupterstreckung in der radial äußeren Oberfläche (14) gemessenen Breite b₁ mit b₁≤3mm und mit einer in radialer Richtung R gemessenen Tiefe t₁ mit 1mm ≤ t₁ ≤ 2mm ausgebildet sind,**
**wobei in der radial äußeren Oberfläche (14) über den Umfang des Reifens verteilt innerhalb des in axialer Richtung A gemessenen mittleren Erstreckungsabschnitts -insbesondere Erstreckungsdrittels -der Umfangsrippe (4) kalottenförmige Vertiefungen (13) mit einem in der radial äußeren Oberfläche (14) ausgebildeten Durchmesser D mit b₁<D≤5mm und mit einer Tiefe t₂ mit t₁ < t₂ ausgebildet sind,**
**wobei in jede Vertiefung (13) ein Kanal (12) mündet,**
**dadurch gekennzeichnet,**
**dass** die Tiefe t₂ mit t₂ ≤ 3mm ausgebildet ist.

2. Fahrzeugluftreifen gemäß den Merkmalen von Anspruch 1,
wobei diese Kanäle (12) der Profilrippe (4) längs ihrer Haupterstreckung mit einer axialen Richtungskomponente - und insbesondere im Wesentlichen parallel zu einander - ausgerichtet sind.

3. Fahrzeugluftreifen gemäß den Merkmalen von Anspruch 1 oder 2,
wobei die Vertiefung (13) in axialer Richtung A des Reifens gesehen jeweils auf derjenigen axialen Seite des Kanals (12) angeordnet, die zu der für den Einsatz am Fahrzeug als Außenschulter OU ausgebildeten Reifenschulter (1) hin weist, und der Kanal (12) in axialer Richtung A des Reifens gesehen auf derjenigen axialen Seite des Vertiefung (13) angeordnet ist, die zu der für den Einsatz am Fahrzeug als Innenschulter IN ausgebildeten Reifenschulter (5) hin weist.

4. Fahrzeugluftreifen gemäß den Merkmalen von einem oder mehreren der vorangegangenen Ansprüche,
wobei in dem einen Oberflächenkanal (12) nach radial innen hin begrenzenden Kanalgrund (17) zusätzlich ein parallel zur Erstreckung des Oberflächenkanals (12) erstreckter Feineinschnitt (16) ausgebildet ist.

5. Fahrzeugluftreifen gemäß den Merkmalen von Anspruch 4,
wobei der Feineinschnitt (16) auf der Mittellinie des Kanalgrundes (17) erstreckt ausgebildet ist.

6. Fahrzeugluftreifen gemäß den Merkmalen von Anspruch 4 oder 5,
wobei der Feineinschnitt (16) mit einer von der radial äußeren Oberfläche (14) in radialer Richtung R nach innen hin gemessenen Tiefe t₃ mit t₁ < t₃ ≤ P_{T} ausgebildet ist, wobei die maximale P_{T} Profiltiefe des Reifens ist.

7. Fahrzeugluftreifen gemäß den Merkmalen von einem oder mehreren der vorangegangenen Ansprüche,
wobei zwei in Umfangsrichtung U benachbart hintereinander angeordnete Oberflächenkanäle (12) jeweils in einem in Umfangsrichtung U gemessenen Abstand a mit 25mm ≤a≤ 40mm zueinander angeordnet sind.

8. Fahrzeugluftreifen gemäß den Merkmalen von einem oder mehreren der vorangegangenen Ansprüche,
wobei zusätzlich -insbesondere jeweils - zwei in Umfangsrichtung U des Reifens benachbart hintereinander angeordnete Vertiefungen (13) durch einen weiteren in der radial äußeren Oberfläche (14) ausgebildeten - und insbesondere im Wesentlichen in Umfangsrichtung U erstreckten - Oberflächenkanal (15) verbunden sind.

## Claims

1. Pneumatic vehicle tyre with a profiled tread comprising profile ribs (1, 2, 3, 4, 5) which are spaced apart from one another by circumferential grooves (6, 7, 8, 9), are made to extend over the circumference of the tyre, are delimited outwardly in the radial direction R by a radially outer surface (14) that forms the ground contact surface and are formed with a width B, measured in the axial direction A of the tyre, in the radially outer surface (14),
wherein, distributed over the circumference of the tyre, surface channels (12) are formed in the radially outer surface (14) of at least one profile rib (4) with a width bi, measured along their main extent in the radially outer surface, where b₁ ≤ 3 mm, and with a depth t₁, measured in the radial direction R, where 1 mm ≤ t₁ ≤ 2 mm;
wherein, distributed over the circumference of the tyre, hemispherical recesses (13) are formed in the radially outer surface (14), within the middle portion of extent - in particular third of extent - measured in the axial direction A, of the circumferential rib (4) with a diameter D, formed in the radialLY outer surface (14), where b₁ < D ≤ 5 mm, and a depth t₂, where t1 < t2;
wherein a channel (12) runs into each recess (13), **characterized**
**in that** the depth t₂ is formed with t₂ ≤ 3 mm.

2. Pneumatic vehicle tyre according to the features of Claim 1,
wherein these channels (12) of the profile rib (4) are aligned along their main extent with an axial directional component - and in particular substantially parallel to one another.

3. Pneumatic vehicle tyre according to the features of Claim 1 or 2,
wherein, seen in the axial direction A of the tyre, the recess (13) is arranged in each case on that axial side of the channel (12) that faces the tyre shoulder (1) which, for use on the vehicle, is formed as the outer shoulder OU, and, seen in the axial direction A of the tyre, the channel (12) is arranged on that axial side of the recess (13) that faces the tyre shoulder (5) which, for use on the vehicle, is formed as the inner shoulder IN.

4. Pneumatic vehicle tyre according to the features of one or more of the preceding claims,
wherein, in the channel base (17) delimiting a surface channel (12) radially inwards, a sipe (16) that is made to extend parallel to the extent of the surface channel (12) is additionally formed.

5. Pneumatic vehicle tyre according to the features of Claim 4,
wherein the sipe (16) is formed so as to extend on the centre line of the channel base (17).

6. Pneumatic vehicle tyre according to the features of Claim 4 or 5,
wherein the sipe (16) is formed with a depth t₃, measured from the radially outer surface (14) inwards in the radial direction R, where t₁ < t₃ ≤ P_{T}, the maximum P_{T} being the profile depth of the tyre.

7. Pneumatic vehicle tyre according to the features of one or more of the preceding claims,
wherein two surface channels (12) that are arranged adjacently one behind the other in the circumferential direction U are arranged in each case at a spacing a, measured in the circumferential direction U, where 25 mm ≤ a ≤ 40 mm.

8. Pneumatic vehicle tyre according to the features of one or more of the preceding claims,
wherein in addition - in particular in each case - two recesses (13) arranged adjacently one behind the other in the circumferential direction U of the tyre are connected by a further surface channel (15), which is formed in the radially outer surface (14) - and in particular is made to extend substantially in the circumferential direction U.

## Revendications

1. Pneumatique de véhicule comprenant une bande de roulement profilée avec des nervures profilées (1, 2, 3, 4, 5) espacées les unes des autres par des rainures périphériques (6, 7, 8, 9) et s'étendant sur la périphérie du pneu, qui sont limitées dans la direction radiale R vers l'extérieur par une surface radialement extérieure (14) formant la surface de contact avec le sol et qui sont réalisées avec une largeur B dans la surface radialement extérieure (14), mesurée dans la direction axiale A du pneu,
dans la surface radialement extérieure (14) d'au moins une nervure profilée (4), des canaux de surface (12) répartis sur la périphérie du pneu étant réalisés avec une largeur b₁ mesurée le long de leur étendue principale dans ladite surface radialement extérieure (14) avec b₁ ≤ 3 mm et avec une profondeur t₁ mesurée dans la direction radiale R avec 1 mm ≤ t₁ ≤ 2 mm,
dans la surface radialement extérieure (14), des renfoncements en forme de calotte (13) répartis sur la périphérie du pneu à l'intérieur de la portion d'étendue centrale, mesurée dans la direction axiale A, en particulier dans un tiers de l'étendue de la nervure périphérique (4), étant réalisés avec un diamètre D réalisé dans la surface radialement extérieure (14), avec b₁ < D ≤ 5 mm et avec une profondeur t₂ avec t₁ < t₂,
un canal (12) débouchant dans chaque renfoncement (13),
**caractérisé en ce que**
la profondeur t₂ est réalisée avec t₂ ≤ 3 mm.

2. Pneumatique de véhicule selon les caractéristiques de la revendication 1, dans lequel ces canaux (12) de la nervure profilée (4) sont orientés le long de leur étendue principale avec une composante directionnelle axiale, et en particulier essentiellement parallèlement les uns aux autres.

3. Pneumatique de véhicule selon les caractéristiques de la revendication 1 ou 2, dans lequel le renfoncement (13), vu dans la direction axiale A du pneu, est à chaque fois disposé du côté axial du canal (12) qui est tourné vers l'épaulement du pneu (1) réalisé pour l'utilisation sur le véhicule en tant qu'épaulement extérieur OU, et le canal (12), vu dans la direction axiale A du pneu, est disposé du côté axial du renfoncement (13) qui est tourné vers l'épaulement du pneu (5) réalisé pour l'utilisation sur le véhicule en tant qu'épaulement intérieur IN.

4. Pneumatique de véhicule selon les caractéristiques d'une ou plusieurs des revendications précédentes, dans lequel, dans le fond de canal (17) limitant radialement vers l'intérieur un canal de surface (12), est en outre réalisée une fine entaille (16) s'étendant parallèlement à l'étendue du canal de surface (12).

5. Pneumatique de véhicule selon les caractéristiques de la revendication 4, dans lequel la fine entaille (16) est réalisée de manière à s'étendre sur l'axe médian du fond de canal (17).

6. Pneumatique de véhicule selon les caractéristiques de la revendication 4 ou 5, dans lequel la fine entaille (16) est réalisée avec une profondeur t₃ mesurée depuis la surface radialement extérieure (14) dans la direction radiale R vers l'intérieur avec t₁ < t₃ ≤ PT, PT étant la profondeur de profilé maximale du pneu.

7. Pneumatique de véhicule selon les caractéristiques d'une ou plusieurs des revendications précédentes, dans lequel deux canaux de surface (12) disposés l'un derrière l'autre en position adjacente dans la direction périphérique U sont à chaque fois disposés à une distance a l'un de l'autre, mesurée dans la direction périphérique U, avec 25 mm ≤ a ≤ 40 mm.

8. Pneumatique de véhicule selon les caractéristiques d'une ou plusieurs des revendications précédentes, dans lequel en outre, en particulier dans chaque cas, deux renfoncements (13) disposés l'un derrière l'autre en position adjacente dans la direction périphérique U du pneu, sont connectés par un canal de surface supplémentaire (15) réalisé dans la surface radialement extérieure (14), et en particulier s'étendant essentiellement dans la direction périphérique U.
